# EUROPEAN PATENT SPECIFICATION

(11) **EP 3 306 293 B1**
(45) Date of publication and mention of the grant of the patent: **14.07.2021**
(21) Application number: 17195619.6
(22) Date of filing: 10.10.2017
(51) Int. Cl.: G01M 5/00, G01B 21/32, G01C 11/00, B64C 13/00, G01C 15/02, G01C 11/12, H04N 7/18, B64D 45/00, B64D 47/08

(54) **AIRCRAFT MONITORING SYSTEM**
FLUGZEUGMONITORINGSYSTEM
TÈME DE SURVEILLANCE D'AÉRONEF

(30) Priority: 10.10.2016 US 201615289477
(43) Date of publication of application: 11.04.2018
(73) Proprietor: The Boeing Company, Chicago, IL 60606-2016 (US)
(72) Inventor: GRIFFITHS, Robert C, Chicago, IL 60606-2016 (US); VOTH, Mitchell D, Chicago, IL 60606-2016 (US)
(74) Representative: Boult Wade Tennant LLP

(56) References cited:
- WO-A1-2016/123618
- CN-A- 105 157 592
- DE-A1-102008 031 858
- US-A1- 2006 007 452
- US-A1- 2006 136 102
- US-A1- 2007 096 979
- US-A1- 2010 166 357

## Description

### BACKGROUND

The present disclosure relates generally to an improved aircraft and, in particular, to a method and apparatus monitoring an aircraft. Still more particularly, the present disclosure relates to a method and apparatus for monitoring stress on an aircraft during operation of the aircraft using vibrations detected using a camera system.

In developing and testing an aircraft, flight tests are performed on the aircraft. Flight testing is performed as part of the development of the aircraft and also for certification of the aircraft. The flight testing is performed to gather data during flight of the aircraft. This data is analyzed to evaluate aerodynamic flight characteristics of the aircraft as well as structural characteristics to validate the design of the aircraft. This data is also used to identify different safety aspects for the aircraft.

In flight testing, it is desirable to find and resolve any undesired characteristics that may occur during flight. These undesired characteristics may include fuel efficiency, amount of sound generated, maneuverability, or other characteristics that do not meet desired specifications for the aircraft.

For example, movement of different structures of the aircraft during flight is monitored. The movement may be, for example, vibrations, bending, twisting, or other types of movement that result in stress on an aircraft structure, such as a wing of the aircraft.

Currently, data about vibrations or other dynamic movements is gathered using accelerometers. Using accelerometers to measure vibrations is often more cumbersome than desired. Using accelerometers involves substantial wiring and is a labor-intensive process. Further, the accelerometers also require calibration which is also a labor-intensive process. As a result, using accelerometers may be more expensive and time-consuming than desired. Further, the use of accelerometers and their associated instrumentation also may increase the weight of the aircraft more than desired for testing purposes.

Therefore, it would be desirable to have a method and apparatus that takes into account at least some of the issues discussed above, as well as other possible issues. For example, it would be desirable to have a method and apparatus that can overcome a technical problem by measuring both static and dynamic movements of aircraft structures.

US-A1-2007/0096979, in accordance with its abstract, states an aircraft aeroelasticity measurement system used to perform in-flight wing twist measurements of an aircraft or any moving vehicle or structure on which its sensors can be mounted. The system includes a centralized processing unit, a reference navigation unit mounted in the aircraft body, a plurality of measurement navigation units mounted in the aircraft wings, and a global positioning system ("GPS") receiver that generates GPS data for enhancing the accuracy of the navigation data. The system collects navigation data from the reference navigation unit and the measurement navigation units, generates navigation solutions from the navigation data, and performs a stochastic alignment and flexure estimation procedure to generate a corrected measurement solution that indicates the aeroelasticity of the aircraft. Wing twist and wing deflection information can be derived from the corrected measurement solution.

US-A1-2006/0136102, in accordance with its abstract, states a method of determining a corrected control surface angle for use in single viewpoint photogrammetry to correct control surface angle measurements affected by wing bending. First and second visual targets are spaced apart from one another on a control surface of an aircraft wing. The targets are positioned at a semispan distance along the aircraft wing. A reference target separation distance is determined using single viewpoint photogrammetry for a "wind off" condition. An apparent target separation distance is then computed for "wind on". The difference between the reference and apparent target separation distances is minimized by re-computing the single viewpoint photogrammetric solution for incrementally changed values of target semispan distances. A final single viewpoint photogrammetric solution is then generated that uses the corrected semispan distance that produced the minimized difference between the reference and apparent target separation distances. The final single viewpoint photogrammetric solution set is used to determine the corrected control surface angle.

CN-A-105157592, in accordance with its abstract, states a binocular vision-based method for measuring the deformation shape and the deformation rate of the flexible trailing edge of an adaptive wing and belongs to the technical field of aircraft wing structures and measuring techniques. The measurement method comprises the steps of acquiring the internal parameters, the external parameters and the steric parameters of cameras, pasting circular marker points on the endpoint of the flexible trailing edge of the adaptive wing and the upper and lower skins of the adaptive wing, controlling two cameras to synchronously shoot the flexible trailing edge at set intervals, processing the obtained images of the flexible trailing edge, detecting image plane coordinates at the circle center of the circular marker points, calculating the coordinates of the three-dimensional object space of the circular marker points, obtaining the shape of the upper and lower edges of the flexible trailing edge through the curve fitting process and calculating the deformation rate of the endpoint of the trailing edge.

WO-A1-2016/123618, in accordance with its abstract, states an optical scanner including a light source located within a housing. A reticle having an aperture is positioned within the housing to receive a first light beam emitted from the light source. The reticle is configured to transmit a second light beam through the aperture. A mirror is positioned within the housing to receive the second light beam transmitted from the reticle and reflect the second light beam through a first window in the housing onto a surface of interest of an object. A light receiver is configured to receive a third light beam from the surface of interest of the object through a second window in the housing, wherein the light receiver is configured to obtain one or more light position values to determine a parameter of the surface of interest of the object. Methods for generating three-dimensional images of an object utilizing the optical scanner are also described.

US-A1-2006/0007452, in accordance with its abstract, states a coded target used in photogrammetry, the target being circular and including at least two concentric coding rings with at least two equal angular sectors, arranged around a central area including a central disk with a uniform color surrounded by a ring with a complementary color, itself surrounded by a ring the same color as the central disk.

DE-A1-102008031858, in accordance with its abstract, states a method for detecting gusts of wind by monitoring a deformation condition of wings of an airplane in real time, where the wings of the airplane are monitored with a camera. Images produced by the camera are evaluated according to images pattern correlation technique by position shifting of stochastic dot pattern of laminar distributed points on the wings of the airplane. Flaps at the wings of the airplane are moved depending on the detected gusts of wind to reduce load of structure of the airplane.

US-A1-2010166357, in accordance with its abstract, states wireless communications are used in a fiber surveillance system to enable monitoring of remote locations for vibrations, acoustic signals, stresses, stress fatigue or other detectable characteristics. A fiber that is deployed in the structure or region being monitored is connected a wireless transmitter that is used to transmit, to a receiving system, return optical signals obtained with the surveillance system. The return signals can be transmitted in raw form or after partial or total analysis.

### SUMMARY

There is described herein an aircraft monitoring system comprising: targets associated with a wing of an aircraft; a camera system configured to generate images of the targets on the wing during operation of the aircraft; and a monitor configured to measure a movement of the targets using the images and to calculate stress in the wing based on the movement of the targets; wherein the monitor is further configured to perform, with the calculation of stress, an action selected from initiating a maneuver and halting a maneuver.

There is also described herein a method for monitoring movement of an aircraft structure, the method comprising: generating images of targets on the aircraft structure using a camera system associated with an interior of an aircraft during operation of the aircraft; measuring movement of the targets using the images; calculating stress at a location on the aircraft structure based on the movement of the targets; and performing, with the calculation of stress, an action selected from initiating a maneuver and halting a maneuver.

The aircraft monitoring system comprises targets associated with the wing of the aircraft, a camera system and a monitor. The camera system is configured to generate images of the targets on the wing during operation of the aircraft. The monitor is configured to measure movement of the targets using images, enabling identifying wing movement.

### BRIEF DESCRIPTION OF THE DRAWINGS

The novel features believed characteristic of the illustrative examples are set forth in the appended claims. The illustrative examples, however, as well as a preferred mode of use, further objectives, and features thereof, will best be understood by reference to the following detailed description of an illustrative example of the present disclosure when read in conjunction with the accompanying drawings, wherein:
**Figure 1** is an illustration of a block diagram of an aircraft monitoring environment in accordance with an illustrative example;
**Figure 2** is an illustration of a block diagram of a more detailed example of an aircraft monitoring system in accordance with an illustrative example;
**Figure 3** is an illustration of a wing with targets in accordance with an illustrative example;
**Figure 4** is an illustration of a wing with elliptical targets in accordance with an illustrative example;
**Figure 5** is an illustration of a deflection of a wing in accordance with an illustrative example;
**Figure 6** is an illustration of a cross-sectional view of a wing in accordance with an illustrative example;
**Figure 7** is an illustration of a waterline deflection along stations extending longitudinally along a roll axis in accordance with an illustrative example;
**Figure 8** is an illustration of a flowchart of a process for monitoring movement of an aircraft structure in accordance with an illustrative example;
**Figure 9** is an illustration of a flowchart of a process for performing an operation in response to identifying stress in an aircraft structure in accordance with an illustrative example;
**Figure 10** is a flowchart of a process for identifying movement of a target in images in accordance with an illustrative example;
**Figure 11** is an illustration of a block diagram of a data processing system in accordance with an illustrative example;
**Figure 12** is an illustration of a block diagram of an aircraft manufacturing and service method in accordance with an illustrative example;
**Figure 13** is an illustration of a block diagram of an aircraft in which an illustrative example may be implemented; and
**Figure 14** is an illustration of a block diagram of a product management system in accordance with an illustrative example.

### DETAILED DESCRIPTION

The illustrative examples recognize and take into account one or more different considerations. For example, the illustrative examples recognize and take into account measuring movement of aircraft structures may be performed using techniques other than accelerometers. For example, the illustrative examples recognize and take account that some systems may be used to generate images of targets. The movement of targets between images may be used to identify movement in an aircraft structure. In this manner, vibrations and stress in the structure may be identified more easily as compared to using accelerometers.

Thus, the illustrative examples provide a method and apparatus for monitoring movement of an aircraft structure. In one illustrative example, an aircraft monitoring system comprises targets, a camera system, and a monitor. The targets are associated with the aircraft structure, such as a wing of an aircraft. The camera system is configured to generate images of the targets on the wing during operation of the aircraft. The monitor measures any movement of the targets using the images, enabling identifying wing movement.

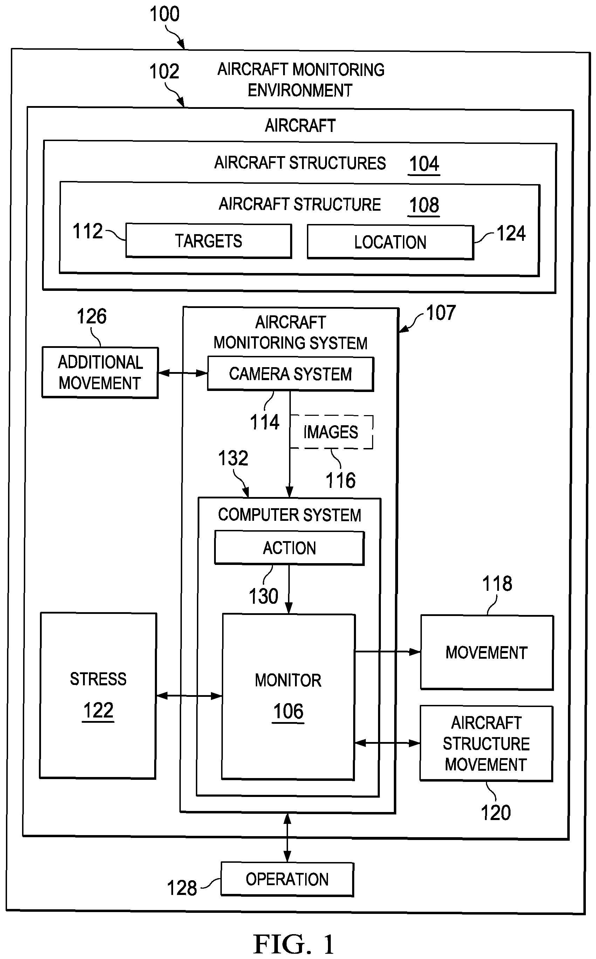

With reference now to the figures and, in particular, with reference to **Figure 1****,** an illustration of a block diagram of an aircraft monitoring environment is depicted in accordance with an illustrative example. In this illustrative example, aircraft monitoring environment **100** includes aircraft **102.** Aircraft **102** may take a number of different forms. For example, aircraft **102** may be selected from a group comprising an airplane, a rotorcraft, a commercial aircraft, a military aircraft, or some other suitable type of aircraft.

One or more of aircraft structures **104** are monitored using monitor **106** in aircraft monitoring system **107.** Aircraft structures **104** include at least one of a wing, a horizontal stabilizer, a vertical stabilizer, an aileron, a flaperon, a flap, an elevator, a rudder, a spoiler, a slat, an engine housing, a nacelle, a fairing, or some other suitable type of aircraft structure. For example, monitor **106** may monitor aircraft structure **108** in aircraft structures **104.**

As used herein, the phrase "at least one of", when used with a list of items, means different combinations of one or more of the listed items may be used, and only one of each item in the list may be needed. In other words, "at least one of" means any combination of items or number of items may be used from the list, but not all of the items in the list are required. The item may be a particular object, a thing, or a category.

For example, without limitation, "at least one of item A, item B, or item C" may include item A, item A and item B, or item B. This example also may include item A, item B, and item C or item B and item C. Of course, any combination of these items may be present. In some illustrative examples, "at least one of" may be, for example, without limitation, two of item A, one of item B, and ten of item C; four of item B and seven of item C; or other suitable combinations.

As depicted, targets **112** are also part of aircraft monitoring system **107** and are associated with aircraft structure **108.** When one component is stated herein to be "associated" with another component, the association may be a physical association. For example, a first component, a target in targets **112** may be considered to be physically associated with a second component, aircraft structure **108,** by at least one of the targets being secured to the second component, bonded to the second component, mounted to the second component, welded to the second component, fastened to the second component, or connected to the second component in some other suitable manner. The first component also may be connected to the second component using a third component. The first component may also be considered to be physically associated with the second component by being formed as part of the second component, being an extension of the second component, or both.

Targets **112** may take a number of different forms. For example, targets **112** may be selected from at least one of a decal, a painted target, or some other suitable form. The form of a target in targets **112** may be different from one location to another location on aircraft structure **108.** For example, targets **112** may have at least one of a different shape, a different color, or other characteristic from location to location on aircraft structure **108.**

In accordance with the claims, aircraft monitoring system **107** also includes camera system **114,** which is configured to generate images **116** of targets **112** during operation **128** of aircraft **102.** As depicted, operation **128** of aircraft **102** may be selected from one of taxiing, cruising, ascending, descending, taking off, landing, or some other suitable type of operation **128** for aircraft **102.**

Images **116** are used by monitor **106** to monitor aircraft structure **108.** Images **116** are of targets **112** associated with aircraft structure **108.**

As depicted, monitor **106** is configured to measure movement **118** of targets **112** using images **116.** In this manner, identifying aircraft structure movement **120** is enabled. In this illustrative example, aircraft structure movement **120** is a vibration of aircraft structure **108.** Aircraft structure movement **120** may be selected from at least one of bending, deflection, twisting, or some other movement of aircraft structure **108** from its original form before a force or load is applied to aircraft structure **108** during flight of aircraft **102.** Further, aircraft structure movement **120** may be intentional movement of aircraft structure **108.** For example, aircraft structure movement **120** may be a deployment of aircraft structure **108** when aircraft structure **108** takes the form of a control surface such as a flap, a slat, or a spoiler. With aircraft structure movement **120,** stress **122** may be identified for aircraft structure **108.**

In accordance with the claims, monitor **106** measures movement **118** of targets **112** at location **124** on aircraft structure **108** using images **116.** By measuring movement 118 of targets **112** at location **124,** monitor **106** identifies stress **122** at location **124.** Stress **122** may result in the aircraft structure movement **120** from one position to another position when a load or force is applied. Stress **122** also may result from aircraft structure movement **120** occurring continuously, such as a vibration of aircraft structure **108.** The real-time aircraft stress monitoring system **107** utilizes these targets **112,** which may be elliptical targets **214,** associated with the wing or other structure of the aircraft **102,** the camera system **114** and monitor **106.** The camera system **114** is configured to generate images of the targets **112, 214** on the wing during operation of the aircraft **102.** The monitor **106** measures movement of the targets **112** using the images and identifies the stress **122** in the wing based on the movement of the targets **112.**

The identification of stress **122** is performed in real time in the illustrative example. In other words, stress **122** is identified as quickly as possible without any intentional delay during operation of aircraft **102.** Monitor **106** is configured to identify stress **122** in aircraft structure **108** at location **124** in real time in this illustrative example. Stress **122** may be identified using vibrations detected in dynamic movement of aircraft structure **108.**

Further, monitor **106** may take in account movements that are not part of movement **118** for targets **112.** For example, in measuring movement **118** of targets **112** using images **116,** monitor **106** is configured to compensate for additional movement **126** from camera system **114** or, optionally, from other sources in aircraft **102.** For example, the camera system 114 may be provided with a movement detector that is operable to track movement of the camera system 114 and to provide a signal that represents this movement as the additional movement 126. This additional movement 126 may then be subtracted from the movement 118 determined for the targets 112. The movement detector may be used to track vibrations or oscillatory motion of the camera system 114. This vibration or oscillatory motion may then be subtracted from the movement 118 determined for the targets 112. In any event, the movement detector may be an accelerometer that is operable to track movement of the camera system 114 and to provide a signal that represents this movement as the additional movement 126. The camera system **114** may be located in a location within aircraft **102.**

As depicted, with the identification of stress **122,** monitor **106** performs action **130.** Action **130** may take a number of different forms. For example, action **130** is selected from one of initiating a maneuver and halting a maneuver. In an example falling outside the scope of the claims, action **130** may be selected from one of initiating a maintenance request, changing a flight parameter, generating an alert indicating that maintenance is needed, sending a report on stress **122,** generating an internal alert for the flight crew, recording stress **122,** or other suitable actions.

Monitor **106** may be implemented in software, hardware, firmware, or a combination thereof. When software is used, the operations performed by monitor **106** may be implemented in a program code configured to run on hardware, such as a processor unit. When firmware is used, the operations performed by monitor **106** may be implemented in a program code and data that is stored in persistent memory to run on a processor unit. When hardware is employed, the hardware may include circuits that operate to perform the operations in monitor **106.**

In the illustrative examples, the hardware may take a form selected from at least one of a circuit system, an integrated circuit, an application specific integrated circuit (ASIC), a programmable logic device, or some other suitable type of hardware configured to perform a number of operations. With a programmable logic device, the device may be configured to perform a number of operations. The device may be reconfigured at a later time or may be permanently configured to perform the number of operations. Programmable logic devices include, for example, a programmable logic array, a programmable array logic, a field programmable logic array, a field programmable gate array, and other suitable hardware devices. Additionally, the processes may be implemented in organic components integrated with inorganic components and may be comprised entirely of organic components, excluding a human being. For example, the processes may be implemented as circuits in organic semiconductors.

Computer system **132** is a physical hardware system and includes one or more data processing systems. As depicted, computer system **132** is located in aircraft **102.** Computer system **132** may include data processing systems for components such as a flight management system, an engine indication and crew alerting system, a navigation system, an autopilot, or other suitable components in aircraft **102.**

When more than one data processing system is present, those data processing systems are in communication with each other using a communications medium. The communications medium may be a network. The data processing systems may be selected from at least one of a computer, a server computer, a tablet, or some other suitable data processing system.

In one illustrative example, one or more technical solutions are present that overcome a technical problem with measuring movement of aircraft structures. For example, the illustrative examples overcome issues including complexity, time, or weight involved with using current techniques, such as accelerometers. As depicted, monitor **106** uses photogrammetry to measure dynamic movements in aircraft structure movement **120** of aircraft structure **108** through detecting movement **118** of targets **112.** Monitor **106** also may be used to detect static movement in aircraft structure movement **120** of aircraft structure **108.** In this manner, monitor **106** may be dynamic movement currently performed using accelerometers in addition to static movement. As a result, monitor **106** may be used to calculate stress **122** identified using vibrations that occur in dynamic movement of aircraft structure **108.**

Further, the vibrations may be detected during operation **128** of aircraft **102.** As a result, stress **122** may be calculated for different vibration characteristics that may occur during different phases of operation of aircraft **102.** In other words, the identification of stress **122** may be detected while aircraft **102** is in flight and in real time using the same data generated by camera system **114** and targets **112.**

As a result, one or more technical solutions may provide a technical effect reducing at least one of the expense, time, or weight for monitoring movement of an aircraft structure. For example, the cost and weight of hardware such as pressure sensors or accelerometers may be avoided. Further, the cost and weight in the wiring in instrumentation for these types of devices also may be avoided. In this manner, the time, expense, and weight of current systems may be avoided. As a result, time and expense may be reduced in the development and certification of the aircraft.

In another illustrative example, maintenance may be identified and scheduled during operation of aircraft **102.** In another illustrative example, monitor **106** may be used to identify when a maneuver should be changed or canceled during operation **128** of aircraft **102.**

Further, computer system **132** operates as a special purpose computer system in which monitor **106** in computer system **132** enables monitoring of aircraft structures **104** in a manner that allows for identifying stress **122** in the aircraft structure. Computer system **132** operates to identify movement **118** of targets **112** in a manner that allows for performing action **130.** For example, if stress **122** is identified from movement **118,** action **130,** such as maintenance, a change in flight of aircraft **102,** or other suitable actions may be performed.

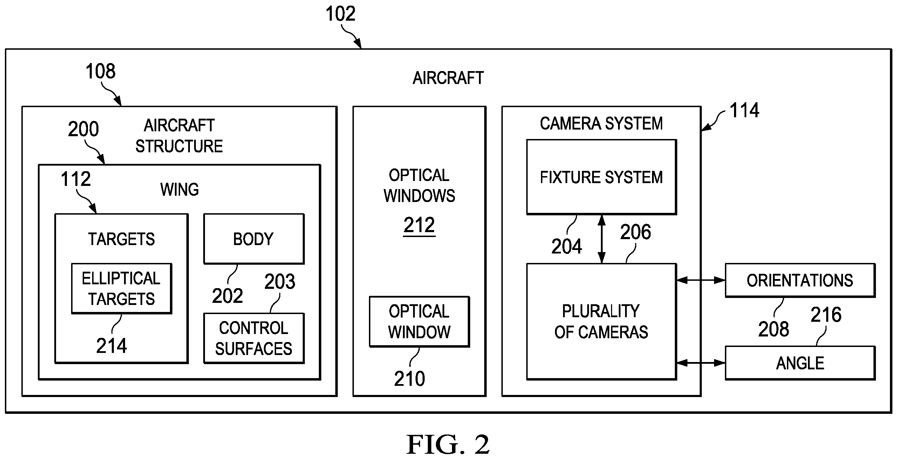

With reference next to **Figure 2****,** an illustration of a block diagram of a more detailed example of an aircraft monitoring system is depicted in accordance with an illustrative example. In the illustrative examples, the same reference numeral may be used in more than one figure. This reuse of a reference numeral in different figures represents the same element in the different figures.

In this more detailed example, aircraft structure **108** takes the form of wing **200.** Wing **200** includes body **202,** control surfaces **203,** and other structures that may be considered part of wing **200.** Body **202** is an airfoil in this example. Control surfaces **203** are structures that may be used to control the airflow over wing **200.**

As depicted, camera system **114** is located inside of body **202** of aircraft **102.** Camera system **114** is selected to generate images **116** of **Figure** 1 quickly enough such that comparisons between images **116** may be made to identify movement **118** of **Figure 1** of targets **112** in a manner that allows for identifying stress **122** of **Figure 1****.** For example, camera system **114** may be selected from at least one of a photogrammetry camera system, a stereo photogrammetry system, or some other suitable type of camera system.

When camera system **114** is a photogrammetry camera system, measurements from photographs are used to identify positions of surface points such as targets **112.** Moreover, the photogrammetry camera system may be used to recover the motion pathways of one or more of targets **112** located on wing **200,** on its components and in the immediately adjacent environment. Photogrammetric analysis may be applied to one photograph, or may use high-speed photography and remote sensing to detect, measure, and record complex 2-D motion fields and 3-D motion fields to identify movement **118** of targets **112.**

For example, oscillatory vibrations of interest on an aircraft structure **108** such as a wing, flaps, slats, or a horizontal tail, are in the range of about 5Hz to about 400Hz. With speed of movement of targets **112,** an 800 frames per second (fps) camera, including Nyquist criteria, may be used to measure the vibration characteristic of these surfaces from movement **118** of targets **112.**

In this illustrative example, camera system **114** comprises fixture system **204** and plurality of cameras **206.** Fixture system **204** may be any platform, frame, or other structure on which plurality of cameras **206** may be mounted or otherwise attached. Additional movement 126 may be determined for the fixture system **204** as a whole or may be determined for one, some or all of the plurality of cameras **206** individually. For example, a movement detector such as an accelerometer may be affixed to the fixture system **204** or to one or more of the plurality of cameras **206.**

As depicted, plurality of cameras **206** is associated with fixture system **204.** The association is such that orientations **208** for plurality of cameras **206** are set independently. The number of cameras in plurality of cameras **206** may vary depending on the particular implementation. For example, the plurality of cameras may be two cameras, 11 cameras, 31 cameras, or some other suitable number of cameras.

In this example, optical window **210** is present in body **202** of the aircraft. Optical window is any window that allows for a desired level of clarity, accuracy, weather design parameters for analyzing images **116** to identify movement **118** of targets **112.** In this illustrative example, camera system **114** of **Figure 1** is positioned to generate images from inside of aircraft **102** with a view through optical window **210.** One or more of plurality of cameras **206** may be positioned to generate images **116** with a view through optical window **210.**

In other illustrative examples, optical window **210** is one window in optical windows **212.** One or more of plurality of cameras **206** may be positioned at optical windows **212** to generate images **116.**

Further in this illustrative example, targets **112** are selected to be visible to camera system **114** in sunlight. Also, targets **112** may be elliptical targets **214.** For example, elliptical targets **214** may have a shape that is selected such that elliptical targets **214** in images **116** generated by camera system **114** are circular based on angle **216** of camera system **114** to elliptical targets **214.**

The illustration of aircraft monitoring environment **100** and the different components in **Figures 1-2** are not meant to imply physical or architectural limitations to the manner in which an illustrative example may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative example.

For example, targets **112** may be present on other aircraft structures in aircraft structures **104** in addition to or in place of aircraft structure **108.** A movement of targets **112** may be into another position or the movement of targets **112** may be one that is dynamic such as those when vibrations occur. This movement may be from an unloaded state to a loaded state of aircraft structure **108.** The change in position of targets **112** may be used to identify stress on aircraft structure **108.** This stress may be identified for dynamic movements of targets **112** such as those that occur with vibrations in which targets **112** continues to move into different positions.

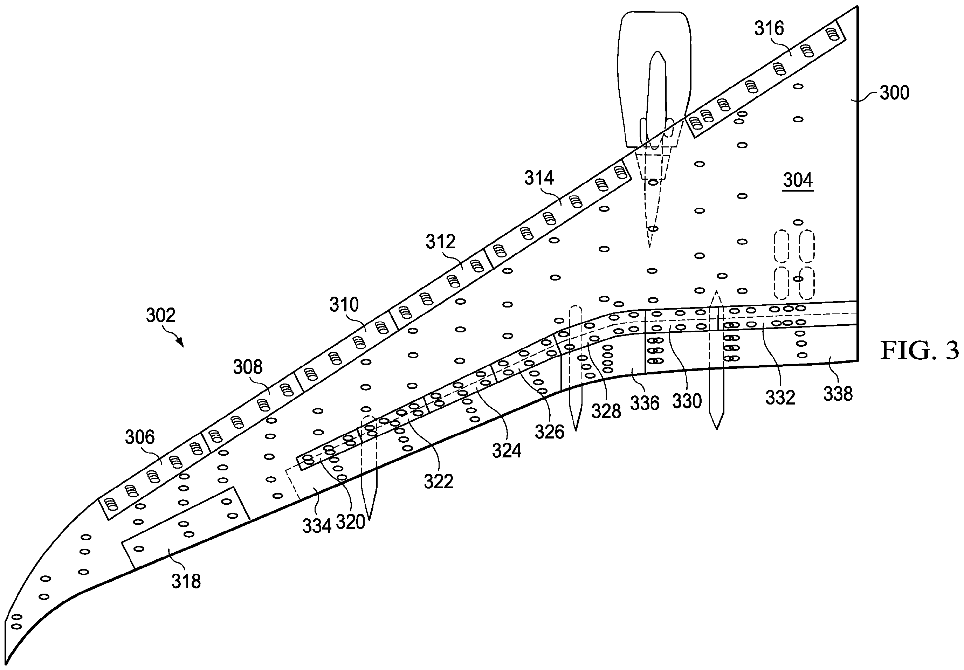

With reference now to **Figure 3****,** an illustration of a wing with targets is depicted in accordance with an illustrative example. In this illustrative example, wing **300** has elliptical targets **302** associated with wing **300.** In this example, wing **300** is an example of one physical implementation for aircraft structure **108,** shown in block form in **Figure** 1. Elliptical targets **302** are examples of one physical implementation for targets **112** shown in block form in **Figure 1** **and** elliptical targets **214** shown in block form in **Figure 2****.**

In this illustrative example, elliptical targets **302** at locations on wing **300.** The selection of the locations may be made in a number of different ways. Locations may be selected based on different portions of wing **300** for which stress is to be identified.

As depicted, wing **300** comprises airfoil **304** as a body or primary structure of wing **300.** Wing **300** also includes control surfaces in the form of outboard slat **306,** outboard slat **308,** outboard slat **310,** outboard slat **312,** outboard slat **314,** inboard slat **316,** aileron **318,** spoiler **320,** spoiler **322,** spoiler **324,** spoiler **326,** hinge panel **328,** spoiler **330,** spoiler **332,** flap **334,** flaperon **336,** and flap **338.**

As illustrated, the locations at these different parts of wing **300** have elliptical targets **302.** In this manner, movement of elliptical targets 302 located at the different parts of wing **300** is identified during operation of the aircraft. In this illustrative example, the movement of elliptical targets **302** may be used to identify movement such as bending, torsion, or other suitable movement. Further, the movement of elliptical targets **302** may be used to identify stress in the different parts.

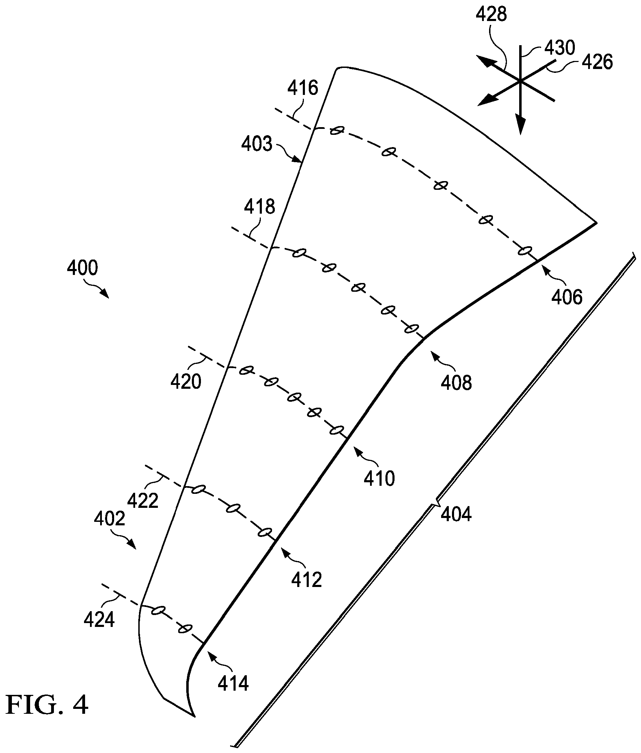

Turning to **Figures 4-6****,** illustrations of the identification of movement in a wing of an aircraft is depicted in accordance with an illustrative example. With reference to **Figure 4****,** an illustration of a wing with elliptical targets is depicted in accordance with an illustrative example. In this illustrative example, the movement may be performed using a monitor, such as monitor **106** in **Figure 1****.**

In this particular example, wing **400** is an example of a physical implementation for aircraft structure **108** shown in block form in **Figure 1****,** and in particular, wing **200** shown in block form in **Figure 2****.** Elliptical targets **402** on wing **400** are examples of physical implementations for targets **112** shown in block form in **Figure** 1 and elliptical targets **214** shown in block form in **Figure 2****.**

In this illustrative example, elliptical targets **402** are decals that are affixed to surface **403** of wing **400.** As depicted, elliptical targets **402** are arranged in rows **404** on wing **400.** Rows **404** include row **406,** row **408,** row **410,** row **412,** and row **414.** The rows are shown aligned along the butt line **416,** butt line **418,** butt line **420,** butt line **422,** and butt line **424.**

With this arrangement of elliptical targets **402,** a reference data set is identified. In the depicted example, the reference data set is identified relative to a pitch axis **426,** roll axis **428,** and yaw axis **430.**

Station references, butt line references, and waterline references are described using coordinates based on pitch axis **426,** roll axis **428,** and yaw axis **430.** Butt line references are set along pitch axis **426,** station references are set along roll axis **428,** and waterline references are set along yaw axis **430** in this illustrative example. The waterline references set locations relative to the height of the upper and lower portion of the aircraft. The butt line references describe left and right portions of the aircraft relative to the centerline of the aircraft. The station references describe forward and aft portions of the aircraft along the centerline of the aircraft. In this example, the centerline is roll axis **428.** These references along with different axes are used to describe different parts of the aircraft in a three-dimensional coordinate system for the aircraft.

In other illustrative examples, other coordinate systems may be used, different origins may be selected, or some combination thereof. For example, the origin may be selected in the cockpit rather than at the center of mass of the aircraft. In this illustrative example, vectors of deflection are primarily in the waterline direction.

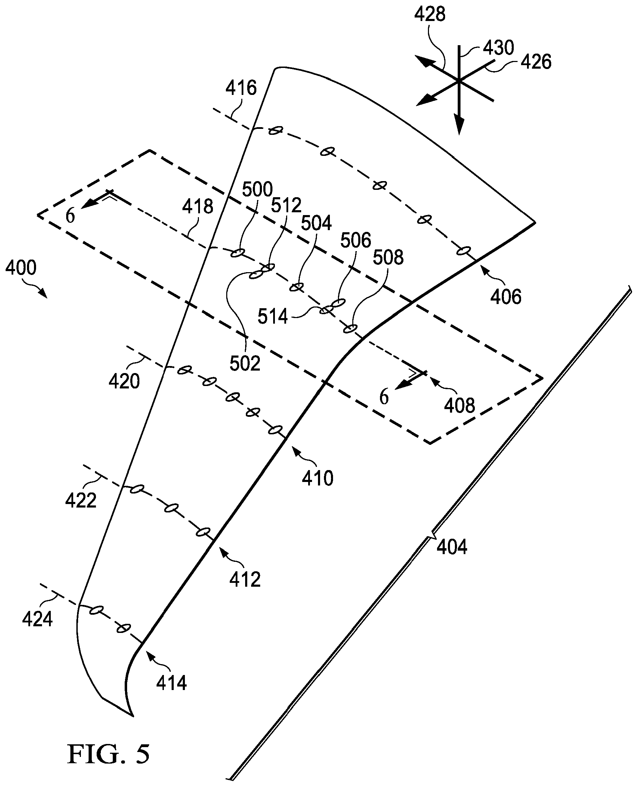

With reference next to **Figure 5****,** an illustration of a deflection of a wing is depicted in accordance with an illustrative example. In this example, a deflection of wing **400** is depicted. In this example, elliptical target **500,** elliptical target **502,** elliptical target **504,** elliptical target **506,** and elliptical target **508** are no longer all aligned along butt line **418.** For example, elliptical target **502** has moved from original location **512** and elliptical target **506** has moved from original location **514.** This movement of elliptical target **502** and elliptical target **506** is relative to butt line **418.**

By using original location **512,** original location **514,** and the current locations of elliptical target **500,** elliptical target **504,** and elliptical target **508,** deflection of wing **400** along butt line **418** may be identified. For example, a localized water line deflection section station and butt line position may be identified. The deflection may be a movement in the form of a bend in wing **400** or from oscillation of wing **400** such as a vibration of wing **400.**

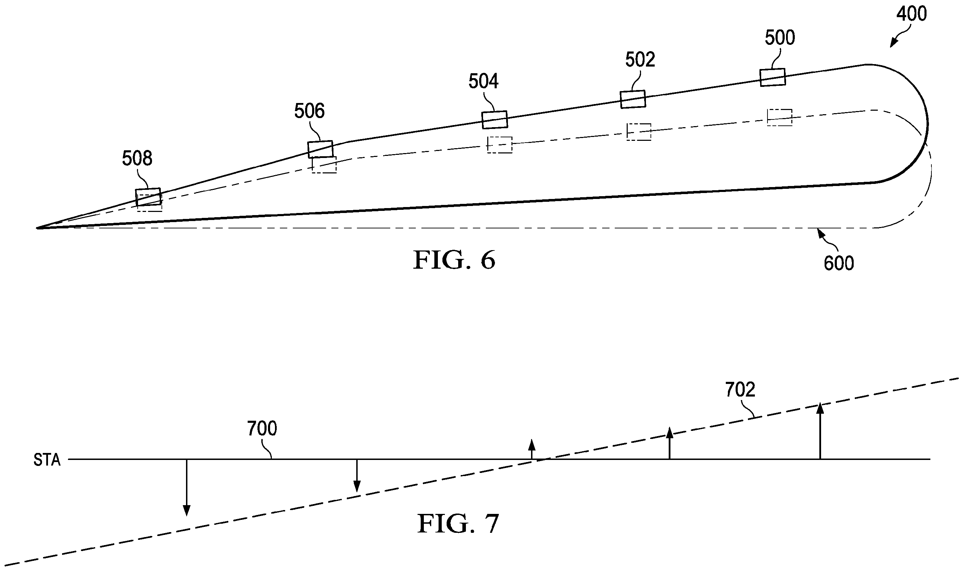

With reference now to **Figure 6****,** an illustration of a cross-sectional view of a wing is depicted in accordance with an illustrative example. In this illustrative example, a cross-sectional view of wing **400** is seen taken along lines 6-6 in **Figure 5****.** In this view, elliptical target **500,** elliptical target **502,** elliptical target **504,** elliptical target **506,** and elliptical target **508** are shown in a current position. Original position and shape of wing **400** is shown with dotted line **600.**

In this illustrative example, a best fit line may be computed through waterline references for each row. The slope of a line may be a twist at a particular butt line.

With this identification, at least one of bending or twisting of wing **400** along butt line **418** of **Figure 4** may be identified. This type of movement may be used to identify stress on wing **400.**

With reference now to **Figure 7****,** an illustration of waterline deflection along stations extending longitudinally along a roll axis is depicted in accordance with an illustrative example. In this illustrative example, line **700** represents stations extending along roll axis **428** in **Figure** 4. Line **702** indicates waterline deflection of elliptical target **500,** elliptical target **502,** elliptical target **504,** elliptical target **506,** and elliptical target **508** of **Figure 5****.**

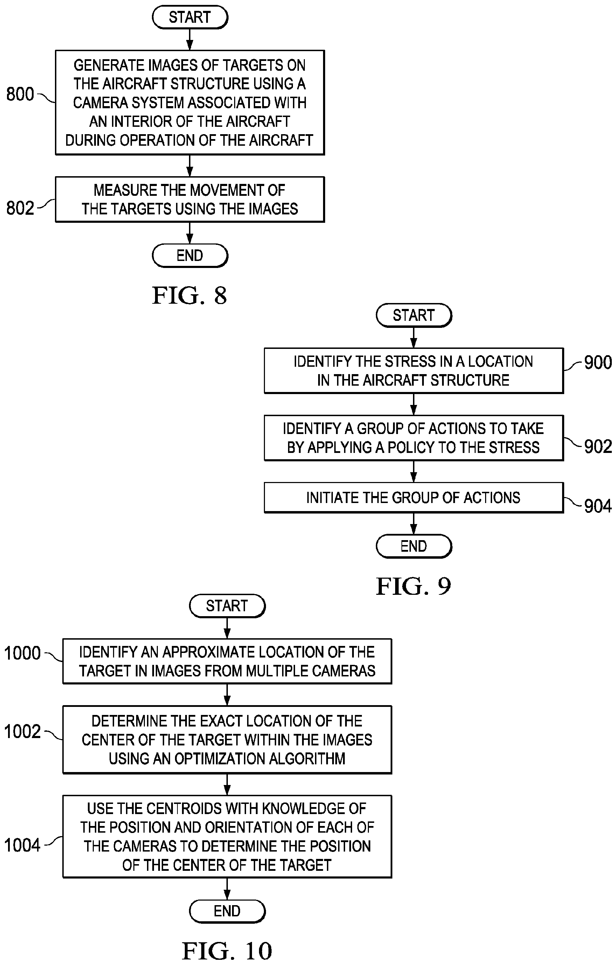

Turning next to **Figure 8****,** an illustration of a flowchart of a process for monitoring movement of an aircraft structure is depicted in accordance with an illustrative example. The process illustrated in this figure may be implemented in monitor **106** in computer system **132** shown in block form in **Figure 1****.**

The process begins by generating images of targets on the aircraft structure using a camera system associated with an interior of the aircraft during operation of the aircraft (operation **800).** The process measures the movement of the targets using the images (operation **802).** The process terminates thereafter. These operations enable identifying the movement of the aircraft structure. As a result, the movement may be used to identify whether the movement is greater than the desired movement for the aircraft structure. Further, the movement may also be used to identify vibrations or other effects that may occur on the aircraft structure.

With reference now to **Figure 9****,** an illustration of a flowchart of a process for performing an operation in response to identifying stress in an aircraft structure is depicted in accordance with an illustrative example. The process illustrated in this figure may be performed using monitor **106** in computer system **132** shown in block form in **Figure 1****.**

The process begins by identifying the stress in a location in the aircraft structure (operation **900).** The location may be a portion or all of the aircraft structure in operation **900.** The aircraft structure may be, for example, a wing, a control surface, or some other suitable aircraft structure.

The process then identifies a group of actions to take by applying a policy to the stress (operation **902).** The policy is a group of rules. These rules may implement at least one of specifications, regulations, industry rules, or other requirements with respect to the aircraft structure. The rules also may identify actions that are to be taken.

As used herein, "a group of" when used with reference to items, means one or more items. For example, a group of actions is one or more actions.

The process then initiates the group of actions (operation **904)** with the process terminating thereafter. For example, the process may initiate an alert to make a change in maneuver and send a maintenance request. In another example, the action may change an operating parameter for the aircraft. These and other actions may be taken pending the particular implementation.

With reference now to **Figure 10****,** a flowchart of a process for identifying movement of a target in images is depicted in accordance with an illustrative example. This process may be used in operation **802** in **Figure** 8 to measure the movement of targets.

The process begins by identifying an approximate location of the target in images from multiple cameras (operation **1000).** In operation **1000** the images are taken at the same time.

The process then determines the exact location of the center of the target within the images using an optimization algorithm (operation **1002).** The center of the target is a centroid and identified in the coordinate system for the image. As a result, the target will have coordinates within each image. The centroid coordinates will be different from each image.

The process uses the centroids with knowledge of the position and orientation of each of the cameras to determine the position of the center of the target (operation **1004).** The process terminates thereafter.

In operation **1004,** the position of the target is in aircraft coordinates. With this type of triangulation process, a three-dimensional location of the target is identified. Changes in the position of the target as computed from some other images acquired at a later time are used to identify movement of the target.

The flowcharts and block diagrams in the different depicted examples illustrate the architecture, functionality, and operation of some possible implementations of apparatuses and methods in an illustrative example. In this regard, each block in the flowcharts or block diagrams may represent at least one of a module, a segment, a function, or a portion of an operation or step. For example, one or more of the blocks may be implemented as program code, hardware, or a combination of the program code and hardware. When implemented in hardware, the hardware may, for example, take the form of integrated circuits that are manufactured or configured to perform one or more operations in the flowcharts or block diagrams. When implemented as a combination of program code and hardware, the implementation may take the form of firmware. Each block in the flowcharts or the block diagrams may be implemented using special purpose hardware systems that perform the different operations or combinations of special purpose hardware and program code run by the special purpose hardware.

In some alternative implementations of an illustrative example, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

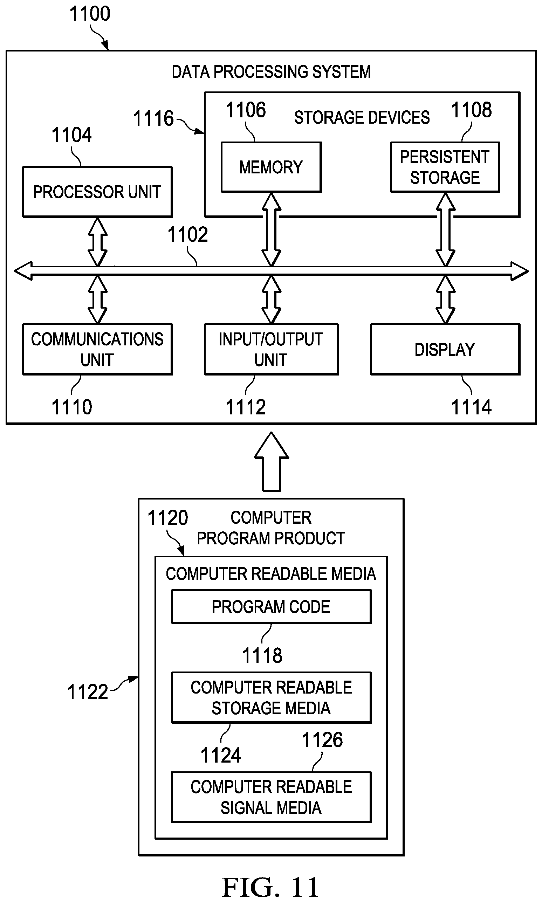

Turning now to **Figure 11****,** an illustration of a block diagram of a data processing system is depicted in accordance with an illustrative example. Data processing system **1100** may be used to implement computer system **132** of **Figure** 1. In this illustrative example, data processing system **1100** includes communications framework **1102,** which provides communications between processor unit **1104,** memory **1106,** persistent storage **1108,** communications unit **1110,** input/output unit **1112,** and display **1114.** In this example, communication framework may take the form of a bus system.

Processor unit **1104** serves to execute instructions for software that may be loaded into memory **1106.** Processor unit **1104** may be a number of processors, a multi-processor core, or some other type of processor, depending on the particular implementation.

Memory **1106** and persistent storage **1108** are examples of storage devices **1116.** A storage device is any piece of hardware that is capable of storing information, such as, for example, without limitation, at least one of data, program code in functional form, or other suitable information either on a temporary basis, a permanent basis, or on both a temporary basis and a permanent basis. Storage devices **1116** may also be referred to as computer readable storage devices in these illustrative examples. Memory **1106** may be, for example, a random access memory or any other suitable volatile or non-volatile storage device. Persistent storage **1108** may take various forms, depending on the particular implementation.

For example, persistent storage **1108** may contain one or more components or devices. For example, persistent storage **1108** may be a hard drive, a solid state hard drive, a flash memory drive, a rewritable optical disk, a rewritable magnetic tape, or some other combination of suitable storage devices. The media used by persistent storage **1108** also may be removable. For example, a removable hard drive may be used for persistent storage **1108.**

Communications unit **1110,** in these illustrative examples, provides for communications with other data processing systems or devices. In these illustrative examples, communications unit **1110** is a network interface card.

Input/output unit **1112** allows for input and output of data with other devices that may be connected to data processing system **1100.** For example, input/output unit **1112** may provide a connection for user input through at least one of a keyboard, a mouse, or some other suitable input device. Further, input/output unit **1112** may send output to a printer. Display **1114** provides a mechanism to display information to a user.

Instructions for at least one of the operating systems, applications, or programs may be located in storage devices **1116,** which are in communication with processor unit **1104** through communications framework **1102.** The processes of the different examples may be performed by processor unit **1104** using computer-implemented instructions, which may be located in a memory, such as memory **1106.**

These instructions are referred to as program code, computer usable program code, or computer readable program code that may be read and executed by a processor in processor unit **1104.** The program code in the different examples may be embodied on different physical or computer readable storage media, such as memory **1106** or persistent storage **1108.**

Program code **1118** is located in a functional form on computer readable media **1120** that is selectively removable and may be loaded onto or transferred to data processing system **1100** for execution by processor unit 1104. Program code **1118** and computer readable media **1120** form computer program product **1122** in this illustrative example. In one example, computer readable media **1120** may be computer readable storage media **1124** or computer readable signal media **1126.**

In these illustrative examples, computer readable storage media **1124** is a physical or tangible storage device used to store program code **1118** rather than a medium that propagates or transmits program code **1118.**

Alternatively, program code **1118** may be transferred to data processing system **1100** using computer readable signal media **1126.** Computer readable signal media **1126** may be, for example, a propagated data signal containing program code **1118.** For example, computer readable signal media **1126** may be at least one of an electromagnetic signal, an optical signal, or any other suitable type of signal. These signals may be transmitted over at least one of communications links, such as wireless communications links, an optical fiber cable, a coaxial cable, a wire, or any other suitable type of communications link.

The different components illustrated for data processing system **1100** are not meant to provide architectural limitations to the manner in which different examples may be implemented. The different illustrative examples may be implemented in a data processing system including components in addition to or in place of those illustrated for data processing system **1100.** Other components shown in **Figure 11** can be varied from the illustrative examples shown. The different examples may be implemented using any hardware device or system capable of running program code **1118.**

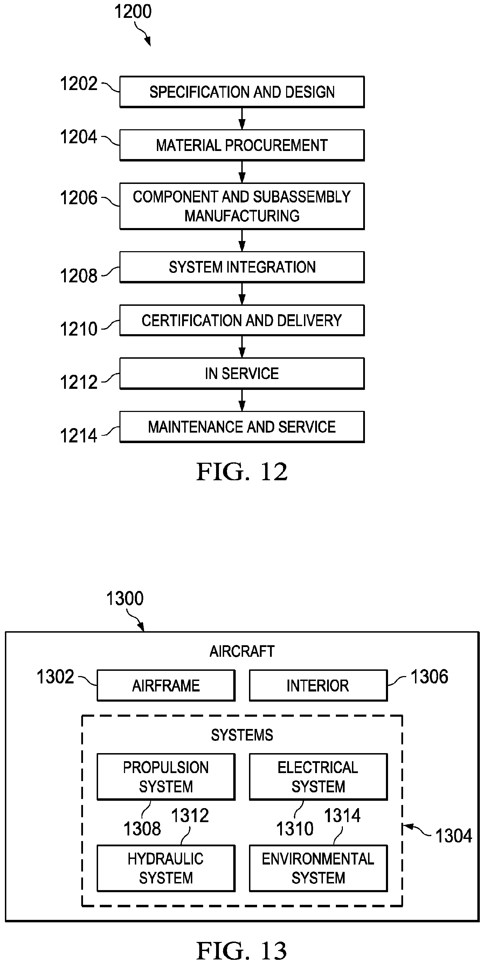

Illustrative examples of the present disclosure may be described in the context of aircraft manufacturing and service method **1200** as shown in **Figure 12** and aircraft **1300** as shown in **Figure 13****.** Turning first to **Figure 12****,** an illustration of a block diagram of an aircraft manufacturing and service method is depicted in accordance with an illustrative example. During pre-production, aircraft manufacturing and service method **1200** may include specification and design **1202** of aircraft **1300** in **Figure 13** and material procurement **1204.**

During production, component and subassembly manufacturing **1206** and system integration **1208** of aircraft **1300** in **Figure 13** takes place. Thereafter, aircraft **1300** in **Figure 13** may go through certification and delivery **1210** in order to be placed in service **1212.** While in service **1212** by a customer, aircraft **1300** in **Figure 13** is scheduled for routine maintenance and service **1214,** which may include modification, reconfiguration, refurbishment, or other maintenance and service.

Each of the processes of aircraft manufacturing and service method **1200** may be performed or carried out by a system integrator, a third party, an operator, or some combination thereof. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 13****,** an illustration of a block diagram of an aircraft is depicted in which an illustrative example may be implemented. In this example, aircraft **1300** is produced by aircraft manufacturing and service method **1200** in **Figure 12** and may include airframe **1302** with a plurality of systems **1304** and interior **1306.** Examples of systems **1304** include one or more of propulsion system **1308,** electrical system **1310,** hydraulic system **1312,** and environmental system **1314.** Any number of other systems may be included. Although an aerospace example is shown, different illustrative examples may be applied to other industries, such as the automotive industry.

Apparatuses and methods embodied herein may be employed during at least one of the stages of aircraft manufacturing and service method **1200** in **Figure 12****.**

In one illustrative example, components or subassemblies produced in component and subassembly manufacturing **1206** in **Figure 12****,** may be fabricated or manufactured in a manner similar to components or subassemblies produced while aircraft **1300** is in service **1212** in **Figure 12****.** As yet another example, one or more apparatus examples, method examples, or a combination thereof, may be utilized during production stages, such as component and subassembly manufacturing **1206** and system integration **1208** in **Figure 12****.** One or more apparatus examples, method examples, or a combination thereof, may be utilized while aircraft **1300** is in service **1212,** during maintenance and service **1214** in **Figure 12****,** or both. The use of a number of the different illustrative examples may substantially expedite the assembly of aircraft **1300,** reduce the cost of aircraft **1300,** or both expedite the assembly of aircraft **1300** and reduce the cost of aircraft **1300.**

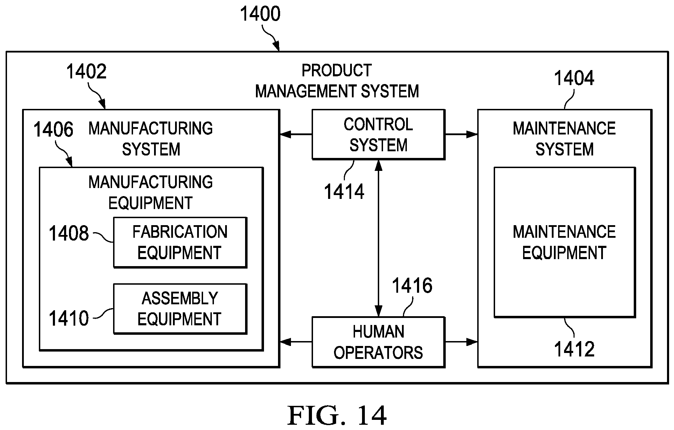

Turning now to **Figure 14****,** an illustration of a block diagram of a product management system is depicted in accordance with an illustrative example. Product management system **1400** is a physical hardware system. In this illustrative example, product management system **1400** may include at least one of manufacturing system **1402** or maintenance system **1404.**

Manufacturing system **1402** is configured to manufacture products, such as aircraft **1300** in **Figure 13****.** As depicted, manufacturing system **1402** includes manufacturing equipment **1406.** Manufacturing equipment **1406** includes at least one of fabrication equipment **1408** or assembly equipment **1410.**

Fabrication equipment **1408** is equipment that may be used to fabricate components for parts used to form aircraft **1300.** For example, fabrication equipment **1408** may include machines and tools. These machines and tools may be at least one of a drill, a hydraulic press, a furnace, a mold, a composite tape laying machine, a vacuum system, a lathe, or other suitable types of equipment. Fabrication equipment **1408** may be used to fabricate at least one of metal parts, composite parts, semiconductors, circuits, fasteners, ribs, skin panels, spars, antennas, or other suitable types of parts.

Assembly equipment **1410** is equipment used to assemble parts to form aircraft **1300.** In particular, assembly equipment **1410** may be used to assemble components and parts to form aircraft **1300.** Assembly equipment **1410** also may include machines and tools. These machines and tools may be at least one of a robotic arm, a crawler, a faster installation system, a rail-based drilling system, or a robot. Assembly equipment **1410** may be used to assemble parts such as seats, horizontal stabilizers, wings, engines, engine housings, landing gear systems, or other parts for aircraft **1300.**

In this illustrative example, maintenance system **1404** includes maintenance equipment **1412.** Maintenance equipment **1412** may include any equipment needed to perform maintenance on aircraft **1300.** Maintenance equipment **1412** may include tools for performing different operations on parts on aircraft **1300.** These operations may include at least one of disassembling parts, refurbishing parts, inspecting parts, reworking parts, manufacturing replacement parts, or other operations for performing maintenance on aircraft **1300.** These operations may be for routine maintenance, inspections, upgrades, refurbishment, or other types of maintenance operations.

In the illustrative example, maintenance equipment **1412** may include ultrasonic inspection devices, x-ray imaging systems, vision systems, drills, crawlers, and other suitable devices. In some cases, maintenance equipment **1412** may include fabrication equipment **1408,** assembly equipment **1410,** or both to produce and assemble parts that may be needed for maintenance.

Product management system **1400** also includes control system **1414.** Control system **1414** is a hardware system and may also include software or other types of components. Control system **1414** is configured to control the operation of at least one of manufacturing system **1402** or maintenance system **1404.** In particular, control system **1414** may control the operation of at least one of fabrication equipment **1408,** assembly equipment **1410,** or maintenance equipment **1412.**

The hardware in control system **1414** may be using hardware that may include computers, circuits, networks, or other types of equipment. The control may take the form of direct control of manufacturing equipment **1406.** For example, robots, computer-controlled machines, and other equipment may be controlled by control system **1414.** In other illustrative examples, control system **1414** may manage operations performed by human operators **1416** in manufacturing or performing maintenance on aircraft **1300.** For example, control system **1414** may assign tasks, provide instructions, display models, or perform other operations to manage operations performed by human operators **1416.** In these illustrative examples, monitor **106** in **Figure 1** communicates with control system **1414** to manage at least one of the manufacturing or maintenance of aircraft **1300** in **Figure 13****.**

For example, monitor **106** in **Figure** 1 may send information about stress for aircraft structures in aircraft **1300** in **Figure 13****.** The information about stress may be sent during operation of aircraft **1300,** after aircraft **1300** has landed, during maintenance of aircraft **1300** or at other times. This information may be used to perform an operation selected from at least one of changing a design of aircraft **1300,** scheduling maintenance for aircraft **1300,** or other suitable operations that may be performed using product management system **1400.**

Changes in design of aircraft **1300** may be implemented during manufacturing of parts, replacement parts, or other components for aircraft **1300** by control system **1414** controlling manufacturing system **1402.** Control system **1414** controls at least one of scheduling of maintenance or performance of maintenance for aircraft **1300** using the stress identified for aircraft **1300.**

In the different illustrative examples, human operators **1416** may operate or interact with at least one of manufacturing equipment **1406,** maintenance equipment **1412,** or control system **1414.** This interaction may be performed to manufacture aircraft **1300.**

Of course, product management system **1400** may be configured to manage other products other than aircraft **1300.** Although product management system **1400** has been described with respect to manufacturing in the aerospace industry, product management system **1400** may be configured to manage products for other industries. For example, product management system **1400** may be configured to manufacture products for the automotive industry as well as any other suitable industries.

Thus, the illustrative examples provide one or more technical solutions are present that overcome a technical problem with measuring movement of aircraft structures. For example, the illustrative examples overcome issues including of complexity, time, or weight involved with using current techniques such as accelerometers.

Further, the illustrative examples may be used to identify vibrations occurring during dynamic movement of an aircraft structure. These vibrations may be used to identify stress that may occur. Additionally, the vibrations may be identified during different times and phases of flight of the aircraft. As a result, vibration cycles may be identified and changes in stress on an aircraft structure for an aircraft also may be identified dynamically and in real time using the same data generated using the camera system and targets on the aircraft structure. Of course, these types of identifications also may be made after flight of an aircraft in other illustrative examples.

As a result, one or more technical solutions may provide a technical effect reducing at least one of the expense, time, or weight for monitoring movement of an aircraft structure. In this manner, the time, expense, and weight of current systems may be avoided. As a result, the development and certification of aircraft may be performed more quickly and with a lower expense. Further, one or more illustrative examples may be used to monitor the aircraft to identify when maintenance should be scheduled for an aircraft. In another illustrative example, the monitor may be used to identify when a maneuver should be changed or canceled during flight of an aircraft.

The description of the different illustrative examples has been presented for purposes of illustration and description and is not intended to be exhaustive or limited to the examples in the form disclosed. The different illustrative examples describe components that perform actions or operations. In an illustrative example, a component may be configured to perform the action or operation described. For example, the component may have a configuration or design for a structure that provides the component an ability to perform the action or operation that is described in the illustrative examples as being performed by the component.

Many modifications and variations will be apparent to those of ordinary skill in the art. Further, different illustrative examples may provide different features as compared to other desirable examples. The example or examples selected are chosen and described in order to best explain the principles of the examples, the practical application, and to enable others of ordinary skill in the art to understand the disclosure for various examples with various modifications as are suited to the particular use contemplated.

## Claims

1. An aircraft monitoring system (107) comprising:
targets (112) associated with a wing (200) of an aircraft (102);
a camera system (114) configured to generate images (116) of the targets (112) on the wing (200) during operation of the aircraft (102); and
a monitor (106) configured to measure a movement (118) of the targets (112) using the images (116) **characterized in that** the monitor (106) is further configured to calculate stress (122) in the wing (200) based on the movement of the targets (112);
wherein the monitor (106) is further configured to perform, with the calculation of stress (122), an action (130) selected from initiating a maneuver and halting a maneuver.

2. The aircraft monitoring system (107) of claim 1, wherein the monitor (106) is configured to calculate the stress (122) in the wing (200) at a location (124) on the wing in real time using vibrations detected in dynamic movement of an aircraft structure (108).

3. The aircraft monitoring system (107) of claim 1 or claim 2, wherein in measuring the movement (118) of the targets (112) using the images (116), the monitor (106) compensates for additional movement (126) from the camera system (114).

4. The aircraft monitoring system (107) of any of claims 1-3 further comprising:
an optical window (210) in a body (202) of the aircraft (102), wherein the camera system (114) is positioned to generate the images (116) from inside the aircraft (102) with a view through the optical window (210).

5. The aircraft monitoring system (107) of any of claims 1-4, wherein the camera system (114) is a photogrammetry camera system or a stereo photogrammetry system.

6. The aircraft monitoring system (107) of any of claims 1-5, wherein the camera system (114) comprises:
a fixture system (204); and
a plurality of cameras (206) associated with the fixture system (204) in which orientations for the plurality of cameras (206) are set independently.

7. The aircraft monitoring system (107) of any of claims 1-6, wherein the targets (112) are elliptical targets (214), and wherein the elliptical targets (214) in the images (116) are circular based on an angle (216) of the camera system (114) to the elliptical targets (214).

8. The aircraft monitoring system (107) of any of claims 1-7, wherein the wing movement is bending, deflection or a twisting.

9. A method for monitoring movement of an aircraft structure (108), the method comprising:
generating (800) images (116) of targets (112) on the aircraft structure (108) using a camera system (114) associated with an interior of an aircraft (102) during operation of the aircraft (102);
measuring (802) movement (118) of the targets (112) using the images (116);
calculating stress (122) at a location (124) on the aircraft structure (108) based on the movement (118) of the targets (112); and
performing, with the calculation of stress (122), an action (130) selected from initiating a maneuver and halting a maneuver.

10. The method of claim 9 further comprising:
calculating the stress (122) in the aircraft structure (108)at the location (124) in real-time.

11. The method of claim 9 or claim 10, wherein in measuring the movement (118) of the targets (112) using the images (116), a monitor (106) compensates for additional movement (126) from the camera system (114).

12. The method of any of claims 9-11, wherein an optical window (210) is present in a body (202) of the aircraft (200) and wherein the camera system (114) is positioned to generate the images (116) from inside of the aircraft (102) with a view through the optical window (210).

13. The method of any one of claims 9-12, wherein the targets (112) are elliptical targets (214), and wherein the elliptical targets (214) in the images (116) are circular based on an angle (216) of the camera system (114) to the elliptical targets (214).

## Patentansprüche

1. Flugzeugüberwachungssystem (107), umfassend:
Ziele (112), die einem Flügel (200) eines Flugzeugs (102) zugeordnet sind;
ein Kamerasystem (114), das konfiguriert ist, um während des Betriebs des Flugzeugs (102) Bilder (116) der Ziele (112) auf dem Flügel (200) zu erzeugen; und
einen Monitor (106), der konfiguriert ist, um unter Verwendung der Bilder (116) eine Bewegung (118) der Ziele (112) zu messen, **dadurch gekennzeichnet, dass** der Monitor (106) ferner konfiguriert ist, um basierend auf der Bewegung der Ziele (112) eine Beanspruchung (122) in dem Flügel (200) zu berechnen;
wobei der Monitor (106) ferner konfiguriert ist, um mit dem Berechnen der Beanspruchung (122) eine Aktion (130) durchzuführen, die unter dem Einleiten eines Manövers und dem Anhalten eines Manövers ausgewählt ist.

2. Flugzeugüberwachungssystem (107) nach Anspruch 1, bei dem der Monitor (106) konfiguriert ist, um die Beanspruchung (122) in der Tragfläche (200) an einer Stelle (124) auf der Tragfläche in Echtzeit unter Verwendung von Schwingungen zu berechnen, die bei der dynamischen Bewegung einer Flugzeugstruktur (108) erfasst werden.

3. Flugzeugüberwachungssystem (107) nach Anspruch 1 oder Anspruch 2, bei dem der Monitor (106) beim Messen der Bewegung (118) der Ziele (112) unter Verwendung der Bilder (116) eine zusätzliche Bewegung (126) von dem Kamerasystem (114) kompensiert.

4. Flugzeugüberwachungssystem (107) nach einem der Ansprüche 1-3, das ferner umfasst:
ein optisches Fenster (210) in einem Körper (202) des Flugzeugs (102), wobei das Kamerasystem (114) positioniert ist, um die Bilder (116) vom Inneren des Flugzeugs (102) aus mit einem Blick durch das optische Fenster (210) zu erzeugen.

5. Flugzeugüberwachungssystem (107) nach einem der Ansprüche 1-4, bei dem das Kamerasystem (114) ein Photogrammetrie-Kamerasystem oder ein Stereo-Photogrammetriesystem ist.

6. Flugzeugüberwachungssystem (107) nach einem der Ansprüche 1-5, bei dem das Kamerasystem (114) umfasst:
ein Befestigungssystem (204); und
eine Mehrzahl von Kameras (206), die dem Befestigungssystem (204) zugeordnet sind, wobei Orientierungen für die Mehrzahl von Kameras (206) unabhängig voneinander eingestellt sind.

7. Flugzeugüberwachungssystem (107) nach einem der Ansprüche 1-6, bei dem die Ziele (112) elliptische Ziele (214) sind und die elliptischen Ziele (214) in den Bildern (116), basierend auf einem Winkel (216) des Kamerasystems (114) zu den elliptischen Zielen (214), kreisförmig sind.

8. Flugzeugüberwachungssystem (107) nach einem der Ansprüche 1-7, bei dem die Flügelbewegung eine Biegung, Auslenkung oder eine Verdrehung ist.

9. Verfahren zur Überwachung der Bewegung einer Flugzeugstruktur (108), wobei das Verfahren umfasst:
Erzeugen (800) von Bildern (116) von Zielen (112) an der Flugzeugstruktur (108) unter Verwendung eines Kamerasystems (114), das einem Innenraum eines Flugzeugs (102) zugeordnet ist, während des Betriebs des Flugzeugs (102);
Messen (802) der Bewegung (118) der Ziele (112) unter Verwendung der Bilder (116);
Berechnen der Beanspruchung (122) an einem Ort (124) auf der Flugzeugstruktur (108) basierend auf der Bewegung (118) der Ziele (112); und
mit dem Berechnen der Beanspruchung (122), Ausführen einer Aktion (130), die aus dem Einleiten eines Manövers und dem Anhalten eines Manövers ausgewählt wird.

10. Verfahren nach Anspruch 9, das ferner umfasst:
Berechnen der Beanspruchung (122) in der Flugzeugstruktur (108) an dem Ort (124) in Echtzeit.

11. Verfahren nach Anspruch 9 oder Anspruch 10, bei dem beim Messen der Bewegung (118) der Ziele (112) unter Verwendung der Bilder (116) ein Monitor (106) eine zusätzliche Bewegung (126) vom Kamerasystem (114) kompensiert.

12. Verfahren nach einem der Ansprüche 9-11, bei dem ein optisches Fenster (210) in einem Körper (202) des Flugzeugs (200) vorhanden ist und das Kamerasystem (114) positioniert ist, um die Bilder (116) aus dem Inneren des Flugzeugs (102) mit einem Blick durch das optische Fenster (210) zu erzeugen.

13. Verfahren nach einem der Ansprüche 9-12, bei dem die Ziele (112) elliptische Ziele (214) sind und die elliptischen Ziele (214) in den Bildern (116), basierend auf einem Winkel (216) des Kamerasystems (114) zu den elliptischen Zielen (214), kreisförmig sind.

## Revendications

1. Système de surveillance d'aéronef (107) comprenant :
des cibles (112) associées à une aile (200) d'un aéronef (102) ;
un système de caméras (114) configuré pour générer des images (116) des cibles (112) sur l'aile (200) pendant le fonctionnement de l'aéronef (102) ; et
un moniteur (106) configuré pour mesurer un déplacement (118) des cibles (112) en utilisant les images (116), **caractérisé en ce que** le moniteur (106) est en outre configuré pour calculer une contrainte (122) dans l'aile (200) sur la base du déplacement des cibles (112) ;
dans lequel le moniteur (106) est en outre configuré pour effectuer, avec le calcul de la contrainte (122), une action (130) sélectionnée parmi le lancement d'une manœuvre et l'arrêt d'une manœuvre.

2. Système de surveillance d'aéronef (107) selon la revendication 1, dans lequel le moniteur (106) est configuré pour calculer la contrainte (122) dans l'aile (200) à un emplacement (124) sur l'aile en temps réel en utilisant des vibrations détectées dans un mouvement dynamique d'une structure d'aéronef (108).

3. Système de surveillance d'aéronef (107) selon la revendication 1 ou la revendication 2, dans lequel lors de la mesure du déplacement (118) des cibles (112) en utilisant les images (116), le moniteur (106) compense un déplacement supplémentaire (126) à partir du système de caméras (114).

4. Système de surveillance d'aéronef (107) selon l'une quelconque des revendications 1 à 3, comprenant en outre :
une fenêtre optique (210) dans un corps (202) de l'aéronef (102), dans lequel le système de caméras (114) est positionné pour générer les images (116) depuis l'intérieur de l'aéronef (102) avec une vue à travers la fenêtre optique (210) .

5. Système de surveillance d'aéronef (107) selon l'une quelconque des revendications 1 à 4, dans lequel le système de caméras (114) est un système de caméras de photogrammétrie ou un système de photogrammétrie stéréo.

6. Système de surveillance d'aéronef (107) selon l'une quelconque des revendications 1 à 5, dans lequel le système de caméras (114) comprend :
un système de fixation (204) ; et
une pluralité de caméras (206) associées au système de fixation (204), où des orientations pour la pluralité de caméras (206) sont établies de manière indépendante.

7. Système de surveillance d'aéronef (107) selon l'une quelconque des revendications 1 à 6, dans lequel les cibles (112) sont des cibles elliptiques (214), et dans lequel les cibles elliptiques (214) dans les images (116) sont circulaires sur la base d'un angle (216) du système de caméras (114) par rapport aux cibles elliptiques (214).

8. Système de surveillance d'aéronef (107) selon l'une quelconque des revendications 1 à 7, dans lequel le mouvement d'aile est une flexion, une déformation ou une torsion.

9. Procédé pour surveiller le déplacement d'une structure d'aéronef (108), le procédé comprenant les étapes consistant à :
générer (800) des images (116) de cibles (112) sur la structure d'aéronef (108) en utilisant un système de caméras (114) associé à un intérieur d'un aéronef (102) pendant le fonctionnement de l'aéronef (102) ;
mesurer (802) le déplacement (118) des cibles (112) en utilisant les images (116) ;
calculer une contrainte (122) au niveau d'un emplacement (124) sur la structure d'aéronef (108) sur la base du déplacement (118) des cibles (112) ; et
effectuer, avec le calcul de la contrainte (122), une action (130) sélectionnée parmi le lancement d'une manœuvre et l'arrêt d'une manœuvre.

10. Procédé selon la revendication 9, comprenant en outre l'étape consistant à :
calculer la contrainte (122) dans la structure d'aéronef (108) au niveau de l'emplacement (124) en temps réel.

11. Procédé selon la revendication 9 ou la revendication 10, dans lequel lors de la mesure du déplacement (118) des cibles (112) en utilisant les images (116), un moniteur (106) compense un déplacement supplémentaire (126) à partir du système de caméras (114).

12. Procédé selon l'une quelconque des revendications 9 à 11, dans lequel une fenêtre optique (210) est présente dans un corps (202) de l'aéronef (200) et dans lequel le système de caméras (114) est positionné pour générer les images (116) depuis l'intérieur de l'aéronef (102) avec une vue à travers la fenêtre optique (210).

13. Procédé selon l'une quelconque des revendications 9 à 12, dans lequel les cibles (112) sont des cibles elliptiques (214), et dans lequel les cibles elliptiques (214) dans les images (116) sont circulaires sur la base d'un angle (216) du système de caméras (114) par rapport aux cibles elliptiques (214).
